# EUROPÄISCHE PATENTSCHRIFT

(11) **EP 1 587 855 B1**
(45) Veröffentlichungstag und Bekanntmachung des Hinweises auf die Patenterteilung: **12.03.2008**
(21) Anmeldenummer: 03785891.7
(22) Anmeldetag: 19.12.2003
(51) Int. Cl.: C08G 65/26

(54) **VERFAHREN ZUR HERSTELLUNG VON POLYOXYALKYLENGLYKOLEN**
METHOD FOR PRODUCING POLYOXYALKYLENE GLYCOLS
PROCEDE DE PRODUCTION DE POLYOXYALKYLENE GLYCOLS

(30) Priorität: 20.12.2002 DE 10261230
(43) Veröffentlichungstag der Anmeldung: 26.10.2005
(73) Patentinhaber: BASF SE, 67056 Ludwigshafen (DE)
(72) Erfinder: BALDENIUS, Kai-Uwe, 67063 Ludwigshafen (DE); LAUTERBACH, Arnulf, 67067 Ludwigshafen (DE); SEELMANN-EGGEBERT, Hans-Peter, 67117 Limburgerhof (DE)
(74) Vertreter: Isenbruck, Günter
(86) Internationale Anmeldenummer: PCT/EP2003/014591
(87) Internationale Veröffentlichungsnummer: WO 2004/056904

(56) Entgegenhaltungen:
- GB-A- 736 991
- DATABASE WPI Section Ch, Week 199349 Derwent Publications Ltd., London, GB; Class A25, AN 1993-392604 XP002278383 & JP 05 294880 A (KAO CORP), 9. November 1993 (1993-11-09)
- DATABASE WPI Section Ch, Week 197823 Derwent Publications Ltd., London, GB; Class A25, AN 1978-41235A XP002278384 & JP 53 046907 A (KURARAY CO LTD), 27. April 1978 (1978-04-27) in der Anmeldung erwähnt

## Beschreibung

Die vorliegende Erfindung betrifft ein Verfahren zur Herstellung von Polyoxyalkylenglykolen durch Polymerisation der entsprechenden Alkylenglykole in Gegenwart eines Reduktionsmittels. Erhalten wird dabei ein Polyoxyalkylenglykol, insbesondere ein Polyethylenglykol von hoher Reinheit mit geringen Farbzahlen.

Ein Weg zur Herstellung von Polyoxyalkylenglykolen ist die Polymerisation der entsprechenden Alkylenoxide durch basische Katalysatoren, beispielsweise Hydroxiden oder Alkoholaten der Alkali- und Erdalkalimetalle. Weiterhin wird dabei ein Alkohol als sogenannter Starter zugegeben, wobei eine Additionsreaktion des Alkylenoxids an den Starter stattfindet.

Beispiele für Polyoxyalkylenglykole sind Polyethylenglykol PEG, Polypropylenglykol PPG und Polybutylenglykol PBG, die aus Ethylenoxid EO, Propylenoxid PO bzw. Butylenoxid BO hergestellt werden. Bekannt sind auch Mischpolymerisate von EO, PO und/oder BO, beispielsweise EO mit PO. Die Mischpolymerisate können statistische Polymere oder Blockcopolymere sein.

Polyoxyalkylenglykole besitzen unterschiedlichste Anwendungsgebiete. Bei manchen werden hohe Anforderungen an Reinheit und Farbzahl des Polyoxyalkylenglykols gestellt, etwa in Produkten, die vom Menschen aufgenommen werden, beispielsweise in Nahrungsmitteln und pharmazeutischen Produkten. Das in diesen Bereichen am häufigsten eingesetzte Polyoxyalkylenglykol ist PEG.

Die Anforderungen an in pharmazeutischen Produkten eingesetztes PEG sind definiert in den unterschiedlichsten Arzneibüchern, beispielsweise dem Deutschen Arzneimittelbuch DAB, der US Pharmacopeia USP und der European Pharmacopeia EUP. So muß nach der USP das PEG farblos sein, entsprechend EUP darf die Farbzahl maximal 20 APHA als 25%ige Lösung in Wasser betragen. Weitere Anforderungen sind beispielsweise ein Wassergehalt von maximal 0,2 %, ein Gehalt an Monoethylenglykol und Diethylenglykol von zusammen maximal 0,25%, ein Gehalt an Sulfatasche von maximal 0,1% und ein Aldehydgehalt (ausgedrückt als HCHO) von maximal 30 ppm.

Zur grosstechnischen Herstellung von Polyoxyalkylenglykolen, insbesondere PEG, die den hohen Anforderungen im Nahrungsmittel- bzw. Pharmabereich entsprechen, wird im allgemeinen von Ausgangsprodukten, also auch Polyoxyalkylenglykolen, hoher Reinheit ausgegangen. Dies erfordert ein aufwendiges Vorreinigen der Edukte und ist somit kostenintensiv. Bezüglich der Herstellung von Polyoxyalkylenglykolen aus Alkylenglykolen technischer Qualität existieren nur wenige Patentanmeldungen.

Die EP-A 1 245 608 beschreibt die Verwendung von Triethylenglykol TEG für die Herstellung von Polyethylenglykolen, wobei ein geringer Gehalt an Monoethylenglykol MEG und Diethylenglykol DEG erzielt wird. Es wird ein PEG mit niedrigem MEG- und DEG-Gehalt erhalten, bzgl. der weiteren Anforderungen werden keine Angaben gemacht. Insbesondere wird auch nicht auf die Farbzahl der erhaltenen Produkte eingegangen.

In der RO-A 62314 wird die Herstellung von Tetraethylenglykol aus TEG und EO unter Basenkatalyse beschrieben. Zur Reinigung muss das Produkt destilliert werden.

JP-A 53 046 907 beschreibt die katalytische Hydrierung von Polyalkylenoxiden zur Reduktion der Farbzahl in den Produkten.

Es kann gesagt werden, dass bis jetzt nur wenige großtechnisch einsetzbare Verfahren existieren, die es gestatten, Polyoxyalkylenglykole hoher Reinheit aus Alkylenglykolen technischer Qualität herzustellen. Diese Verfahren liefern häufig ein bestimmtes Polyoxyalkylenglykol in der gewünschten hohen Reinheit, andere Polyoxyalkylenglykole sind nicht oder nicht in den gewünschten Reinheiten erhältlich.

Die Aufgabe der vorliegenden Erfindung besteht darin, ein Verfahren zur Herstellung von Polyoxyalkylenglykolen, insbesondere PEG, bereitzustellen, das ausgehend von Alkylenglykolen technischer Qualität die gewünschten Produkte in Qualitäten liefert, die hohen Anforderungen an Farbe und Reinheit genügen. Das Verfahren soll universell einsetzbar sein. Vorzugsweise sollen die Polyoxyalkylenglykole bzw. das PEG den Anforderungen in der Nahrungsmittel- und Pharmazeutischen Industrie genügen. Insbesondere sollen die in verschiedenen Arzneimittelbüchern vorgegebenen Anforderungen erfüllt werden.

Diese Aufgabe wird gelöst durch ein Verfahren zur Herstellung von Polyoxyalkylenglykol hoher Reinheit mit niedriger Farbzahl aus dem entsprechenden Alkylenoxid und einem Starter in Anwesenheit eines basischen Katalysators, dadurch gekennzeichnet, dass bei der Polymerisation ein Reduktionsmittel anwesend ist.

Vorzugsweise ist das Polyoxyalkylenglykol PEG.

Es wurde gefunden, dass durch die Anwesenheit einer reduzierenden Verbindung während der Polymerisationsreaktion Polyoxyalkylenglykole hoher Reinheit und geringer Farbzahl erhalten werden.

Vorzugsweise wird das Reduktionsmittel vor der Polymerisation zugegeben. Es kann jedoch auch während der Polymerisation zugegeben werden.

Es können die üblichen Reduktionsmittel eingesetzt werden, die dem Fachmann bekannt sind. Beispiele umfassen komplexe Hydride, beispielweise Boranate und Aluminate, vorzugsweise LiAlH₄, NaBH₄, LiBH₄, und KBH₄, BH₃, Alkylborane und Wasserstoff in Verbindung mit dem Fachmann bekannten Hydrierkatalysatoren sowie Mischungen der genannten Reduktionsmittel. Mehr bevorzugt werden Boranate, besonders bevorzugt werden KBH₄ oder NaBH₄ und Mischungen daraus.

Das Reduktionsmittel wird in Mengen von 0,002 bis 0,06 Gew.-%, vorzugsweise 0,002 bis 0,02 Gew.-%, insbesondere 0,004 bis 0,02 Gew.-% eingesetzt. Der Einsatz kann in Form eines Feststoffs oder als Lösung oder Suspension in einem geeigneten Lösungsmittel erfolgen. Geeignete Lösungsmittel sind dem Fachmann bekannt, Beispiele umfassen die alkalisch stabilisierte Lösung, tertiäre Alkohole, sekundäre Alkohole, beispielsweise isoPropanol, oder auch primäre Alkohole wie Methanol und Ethanol. Auch der als Starter eingesetzte Alkohol kann als Lösungsmittel dienen.

Vorzugsweise wird das Reduktionsmittel in Form einer Lösung zugegeben.

Erfindungsgemäß können die verschiedensten Starter eingesetzt werden, wobei sich deren Einsatz nach dem zu erhaltenen Polyoxyalkylenglykol richtet. Beispiele für geeignete Starter umfassen Monoethylenglykol MEG, Diethylenglykol DEG, Triethylenglykol TEG, Monopropylenglykol MPG, Dipropylenglykol DPG, Tripropylenglykol TPG, Monobutylenglykol, und Dibutylenglykol.

Geeignete basische Katalysatoren sind dem Fachmann bekannt und sind generell ausgewählt aus Hydroxiden und Alkoholaten der Alkali- und Erdalkalimetalle. Er wird in einer Menge von 0,001 bis 5 Gew.-%, vorzugsweise 0,01 bis 1 Gew.-%, zugegeben.Die Katalysatoren werden erfindungsgemäss generell in Kombination mit dem Reduktionsmittel eingesetzt und können als Mischung mit dem Starter oder Reaktionsmittel oder getrennt zu dem umzusetzenden Reaktionsgemisch gegeben werden.

Alternativ zu der getrennten Verwendung von Reduktionsmittel und Katalysator ist es möglich, stark basische Reduktionsmittel zu verwenden, die in situ Alkoholate erzeugen. Beispiele solcher basischer Reduktionsmittel umfassen LiAlH₄, KAlH₄ und NaBH₄ in alkalisch stabilisierter wässriger Lösung, vorzugsweise mit NaOH oder KOH.

Die Umsetzung des Starters mit Alkylenoxid wird in der Regel so durchgeführt, daß Starter und Katalysator und/oder das basische Reduktionsmittel vor der Zugabe von Alkylenoxid vermischt, ggf. entwässert und auf die Reaktionstemperatur oberhalb 80°C gebracht werden. Dann wird das Alkylenoxid hinzugegeben. Nach dem Ausklingen der Reaktion wird die Mischung abgekühlt und aus dem Reaktor abgelassen. Bevorzugt wird die Reaktion im Temperaturbereich zwischen 105 und 180°C, besonders bevorzugt zwischen 115 und 160°C durchgeführt.

Es wird vermutet, dass die hohen Farbzahlen von Polyoxyalkylenglykolen, die bei Polymerisation von Startern technischer Qualität resultieren, durch die Anwesenheit von Aldehyden verursacht werden. Wie in den Beispielen gezeigt wird, korrelieren die hohen Farbzahlen der durch Polymerisation von Startern technischer Qualität erhaltenen Polyoxyalkylenglykole mit der Menge der Carbonylfunktion im Starter. Durch Zugabe der erfindungsgemäß verwendeten Reduktionsmittel werden diese Carbonylfunktionen (Aldehyde und Ketone) reduziert und somit niedrige Farbzahlen erreicht.

Vorzugsweise wird die vorliegende Erfindung zur Herstellung Polyethylenglykol PEG hoher Reinheit und niedriger Farbzahl aus Starter technischer Qualität eingesetzt. Es ist mehr bevorzugt, wenn der dabei eingesetzte Starter Triethylenglykol TEG ist. In einem solchen Fall wird ein PEG erhalten, das neben einer geringen Farbzahl nur eine geringe Menge an MEG und DEG aufweist und daher prinzipiell für den Einsatz in Nahrungsmitteln und pharmazeutischen Produkten geeignet ist.

Insbesondere wird das Verfahren nach der vorliegenden Erfindung eingesetzt, um PEG aus Ethylenoxid mit TEG als Starter herzustellen, wobei das PEG ein Molgewicht von 150 bis 500 mol/g, vorzugsweise 190 bis 300 mol/g, insbesondere 190 bis 250 mol/g aufweist.

Grosstechnische Verfahren, die aus Startern technischer Qualität PEG eines Molgewichts ≤ 500 g/mol der erfindungsgemäss erzielten Qualität liefern, existieren bis jetzt nicht.

Die mit dem erfindungsgemäßen Verfahren erreichte Farbzahl richtet sich nach der Reinheit der Einsatzprodukte sowie auch der Menge an Reduktionsmittel. Das erfindungsgemässe Verfahren erlaubt bei der Herstellung von PEG den Einsatz von Startern mit Carbonylgehalten > 25 ppm. Es lassen sich erfindungsgemäss problemlos Farbzahlen < 20 APHA erreichen, wodurch ein entsprechendes PEG die Anforderungen gemäß European Pharmacopeia erreicht. Durch Anpassen der Reaktionsbedingungen bzw. der gewählen Ausgangsprodukte können auch PEG-Qualitäten nach USP erhalten werden, die farblos sind. Dies ist generell bei Farbzahlen von < 10 APHA der Fall.

Die Erfindung wird nun in den nachfolgenden Beispielen erläutert.

### Beispiel 1 (Vergleich)

900 g Triethylenglykol (Carbonylgehalt als Acetaldehyd 400 ppm) werden mit 1,2 g KOH in einen Druckbehälter gefüllt. Dann wird bei 120 bis 130 °C mit 300 g Ethylenoxid umgesetzt. Nach Abreaktion wird das Produkt unter Stickstoff abgefüllt und analysiert: Farbzahl nach Hazen 354 APHA.

### Beispiel 2 (Vergleich)

300 g TEG (Carbonylgehalt als Acetaldehyd 25 ppm) werden mit 1,33 g 30% Natriummethanolat in Methanol in einen Druckbehälter gefüllt. Methanol wird bei (80°C im Vakuum (20 mbar) enfernt. Dann wird bei 120 bis 130 °C mit 100,3 g Ethylenoxid umgesetzt. Nach Abreaktion wird das Produkt unter Stickstoff abgefüllt und analysiert: Farbzahl nach Hazen 22 APHA.

### Beispiel 3

300 g TEG (Carbonylgehalt als Acetaldehyd 4000 ppm) werden mit 1,50 g Borollösung (wäßrige Lösung von ca. 12% NaBH₄ und ca. 40% NaOH) in eine Druckbehälter-gefüllt. Wasser wird bei 80°C im Vakuum (20 mbar) enfernt. Dann wird bei 120 bis 130 °C mit 100,3g Ethylenoxid umgesetzt. Nach Abreaktion wird das Produkt unter Stickstoff abgefüllt und analysiert: Farbzahl nach Hazen 12 APHA.

### Beispiel 4

600 g TEG (Carbonylgehalt als Acetaldehyd 75 ppm) werden mit 0,72g Borollösung in einem Druckbehälter gefüllt. Wasser wird bei 100°C im Vakuum (20 mbar) enfernt. Dann wird bei 120 bis 130 °C mit 100,3g Ethylenoxid umgesetzt. Nach Abrekation wird das Produkt unter Stickstoff abgefüllt und analysiert: Farbzahl nach Hazen 6 APHA. GC-Analyse MEG < 0,05 %, DEG < 0,05%, Sulfatasche 0,08 %, Aussehen: klar, Viskosität 4,43 mm²/s (98,9 °C), OH Zahl 557 mg KOH/g.

### Beispiel 5

300 g TEG (Carbonygehalt als Acetaldehyd 72 ppm) werden mit 0,09 g Borollösung in einen Druckbehälter gefüllt. Wasser wird bei 100°C im Vakuum (5 mbar) entfernt. Dann wird bei 120 bis 130°C mit 100,3 g Ethylenoxid umgesetzt. Nach Abreaktion wird das Produkt unter Stickstoff abgefüllt und analysiert: Farbzahl nach Hazen 2 APHA.

### Beispiel 6

300 g TEG (Carbonygehalt als Acetaldehyd 72 ppm) werden mit 0,18 g Borollösung in einen Druckbehälter gefüllt. Wasser wird bei 100°C im Vakuum (5 mbar) entfernt. Dann wird bei 145 bis 155°C mit 100,3 g Ethylenoxid umgesetzt. Nach Abreaktion wird das Produkt unter Stickstoff abgefüllt und analysiert: Farbzahl nach Hazen 6 APHA.

Alle genannten Farbzahlen beziehen sich auf die 25%ige Lösung der Produkte in Wasser.

## Patentansprüche

1. Verfahren zur Herstellung von Polyethylenglykol hoher Reinheit mit niedriger Farbzahl aus Ethylenoxid und Triethylenglykol in Anwesenheit eines basischen Katalysators, wobei bei der Polymerisation ein Reduktionsmittel anwesend ist und das Triethylenglykol von technischer Qualität mit Carbonylgehalten > 25 ppm ist und wobei die Menge des Reduktionsmittels 0,002 bis 0,06 Gew.-% beträgt.

2. Verfahren nach Anspruch 1, **dadurch gekennzeichnet, dass** das Reduktionsmittel vor oder zu Beginn der Polymerisation, vorzugsweise vor der Polymerisation, zugegeben wird.

3. Verfahren nach Anspruch 1 oder 2, **dadurch gekennzeichnet, dass** das Reduktionsmittel ausgewählt ist aus komplexen Hydriden, vorzugsweise Boranaten und Aluminaten, insbesondere LiAlH₄, NaBH₄, LiBH₄, und KBH₄, BH₃, Alkylboranen, und Wasserstoff in Verbindung mit dem Fachmann bekannten Hydrierkatalysatoren, sowie Mischungen der genannten Reduktionsmittel.

4. Verfahren nach einem der Ansprüche 1 bis 3, **dadurch gekennzeichnet, dass** die Menge an Reduktionsmittel 0,002 bis 0,02 Gew.-%, insbesondere 0,004 bis 0,02 Gew.-% beträgt.

5. Verfahren nach einem der Ansprüche 1 bis 4, **dadurch gekennzeichnet, dass** der basische Katalysator ausgewählt ist aus Hydroxiden und Alkoholaten der Alkali- und Erdalkalimetalle.

6. Verfahren nach einem der Ansprüche 1 bis 5, **dadurch gekennzeichnet, dass** der basische Katalysator in einer Menge von 0,001 bis 5 Gew.-%, vorzugsweise 0,01 bis 1 Gew.-%, zugegeben wird.

7. Verfahren nach einem der Ansprüche 1 bis 6, **dadurch gekennzeichnet, dass** das Reduktionsmittel einen Basengehalt aufweist oder selber basische Eigenschaften besitzt, vorzugsweise ausgewählt ist aus KBH₄ und NaBH₄ in alkalisch stabilisierter wässriger Lösung, vorzugsweise mit NaOH oder KOH.

8. Verfahren nach einem der Ansprüche 1 bis 7, **dadurch gekennzeichnet, dass** das erhaltene Polyethylenglykol ein Molgewicht von 150 bis 500 g/mol, vorzugsweise 190 bis 300 g/mol, insbesondere 190 bis 250 g/mol aufweist.

## Claims

1. A process for preparing polyethylene glycol of high purity and having a low color number from ethylene oxide and triethylene glycol in the presence of a basic catalyst, a reducing agent being present in the course of polymerization and the triethylene glycol being of technical grade quality with carbonyl contents of > 25 ppm and the amount of reducing agent being from 0.002 to 0.06% by weight.

2. The process according to claim 1, wherein the reducing agent is added before or at the beginning of the polymerization, preferably before the polymerization.

3. The process according to claim 1 or 2, wherein the reducing agent is selected from complex hydrides, preferably borohydrides and aluminohydrides, especially LiAlH₄, NaBH₄, LiBH₄ and KBH₄, BH₃, alkylboranes and hydrogen in combination with hydrogenation catalysts known to those skilled in the art, and also mixtures of the reducing agents mentioned.

4. The process according to any of claims 1 to 3, wherein the amount of reducing agent is from 0.002 to 0.02% by weight, in particular from 0.004 to 0.02% by weight.

5. The process according to any of claims 1 to 4, wherein the basic catalyst is selected from hydroxides and alkoxides of the alkali metals and alkaline earth metals.

6. The process according to any of claims 1 to 5, wherein the basic catalyst is added in an amount of from 0.001 to 5% by weight, preferably from 0.01 to 1% by weight.

7. The process according to any of claims 1 to 6, wherein the reducing agent includes an amount of base or itself has basic properties, and is preferably selected from KBH₄ and NaBH₄ in alkali-stabilized aqueous solution, preferably with NaOH or KOH.

8. The process according to any of claims 1 to 7, wherein the polyethylene glycol obtained has a molecular weight of from 150 to 500 g/mol, preferably from 190 to 300 g/mol, especially from 190 to 250 g/mol.

## Revendications

1. Procédé de fabrication de polyéthylèneglycol de pureté élevée et de faible indice de couleur à partir d'oxyde d'éthylène et de triéthylèneglycol en présence d'un catalyseur basique, dans lequel un agent réducteur est présent lors de la polymérisation et le triéthylèneglycol est de qualité technique avec des teneurs en carbonyle > 25 ppm et dans lequel la quantité de l'agent réducteur est de 0,002 à 0,06 % en poids.

2. Procédé selon la revendication 1, **caractérisé en ce que** l'agent réducteur est ajouté avant ou au début de la polymérisation, de préférence avant la polymérisation.

3. Procédé selon la revendication 1 ou 2, **caractérisé en ce que** l'agent réducteur est choisi parmi les hydrures complexes, de préférence les boranates et les aluminates, en particulier LiAlH₄, NaBH₄, LiBH₄ et KBH₄, BH₃, les alkylboranes et l'hydrogène conjointement avec des catalyseurs d'hydrogénation connus de l'homme du métier ainsi que les mélanges des agents réducteurs cités.

4. Procédé selon l'une quelconque des revendications 1 à 3, **caractérisé en ce que** la quantité d'agent réducteur est de 0,002 à 0,02 % en poids, en particulier de 0,004 à 0,02 % en poids.

5. Procédé selon l'une quelconque des revendications 1 à 4, **caractérisé en ce que** le catalyseur basique est choisi parmi les hydroxydes et les alcoolates de métaux alcalins et alcalinoterreux.

6. Procédé selon l'une quelconque des revendications 1 à 5, **caractérisé en ce que** l'on ajoute le catalyseur basique en quantité de 0,001 à 5 % en poids, de préférence de 0,01 à 1 % en poids.

7. Procédé selon l'une quelconque des revendications 1 à 6, **caractérisé en ce que** l'agent réducteur présente une certaine teneur en bases ou possède lui-même des propriétés basiques, est de préférence choisi parmi KBH₄ et NaBH₄ en solution aqueuse stabilisée par un alcali, de préférence NaOH ou KOH.

8. Procédé selon l'une quelconque des revendications 1 à 7, **caractérisé en ce que** le polyéthylèneglycol obtenu présente un poids moléculaire de 150 à 500 g/mole, de préférence de 190 à 300 g/mole, en particulier de 190 à 250 g/mole.
